# EUROPEAN PATENT APPLICATION

(11) **EP 4 800 068 A1**
(43) Date of publication of application: **02.09.2026**
(21) Application number: 25837229.1
(22) Date of filing: 10.07.2025
(51) Int. Cl.: C08L 27/12, C08K 5/36, C08L 27/16

(54) **FLUORORUBBER COMPOSITION AND MOLDED ARTICLE**

(30) Priority: 12.07.2024 JP 2024112571
(71) Applicant: Daikin Industries, Ltd., Osaka-shi, Osaka 530-0001 (JP)
(72) Inventor: TAKEMURA, Kouhei, Osaka-Shi, Osaka 530-0001 (JP); KITAGAWA, Michiko, Osaka-Shi, Osaka 530-0001 (JP)
(74) Representative: Hoffmann Eitle
(86) International application number: PCT/JP2025/024871
(87) International publication number: WO 2026/014520

(57) **Abstract**

Provided is a fluoroelastomer composition comprising a fluoroelastomer (a) and a cross-linking agent (b), wherein the cross-linking agent (b) has, in the molecule, two or more hydroxy groups, two or more carbon atoms, and at least one linking group that links a carbon atom to another carbon atom, selected from the group consisting of monosulfide bond, disulfide bond, and a polysulfide bond, and wherein the cross-linking agent (b) has no fluorine atom.

## Description

### TECHNICAL FIELD

The present disclosure relates to a fluoroelastomer composition, and a formed article.

### BACKGROUND ART

Patent Document 1 discloses, as an essential component in the final curable composition, an aromatic polyhydroxy compound capable of acting as a cross-linking agent or an auxiliary curing agent for a fluorinated elastomer. One of the most useful aromatic polyphenols is a bisphenol compound, hexafluoroisopropylidene-bis(4-hydroxybenzene), known as bisphenol AF.

### RELATED ART

### PATENT DOCUMENTS

Patent Document 1: Japanese Patent Publication No. 64-418

### SUMMARY OF THE INVENTION

### PROBLEM TO BE SOLVED BY THE INVENTION

An object of the present disclosure is to provide a fluoroelastomer composition that contains a cross-linking agent having no fluorine atom.

### MEANS FOR SOLVING THE PROBLEM

The present disclosure provides a fluoroelastomer composition comprising a fluoroelastomer (a) and a cross-linking agent (b), wherein the cross-linking agent (b) has, in the molecule, two or more hydroxy groups, two or more carbon atoms, and at least one linking group that links a carbon atom to another carbon atom, selected from the group consisting of monosulfide bond, disulfide bond, and a polysulfide bond, and wherein the cross-linking agent (b) has no fluorine atom.

### EFFECTS OF INVENTION

According to the present disclosure, a fluoroelastomer composition can be provided that contains a cross-linking agent having no fluorine atom.

### DESCRIPTION OF EMBODIMENTS

Hereinafter, specific embodiments of the present disclosure will now be described in detail, but the present disclosure is not limited to the following embodiments.

A fluoroelastomer composition of the present disclosure contains a fluoroelastomer (a) and a cross-linking agent (b).

By using a crosslinkable composition containing bisphenol AF as a cross-linking agent, a formed article having sufficient physical properties can be obtained. On the other hand, when bisphenol AF adheres to equipment used for weighing or preparation of the composition, since bisphenol AF is a compound having fluorine atoms, a dedicated incineration apparatus is required to treat the product resulting from washing of bisphenol AF adhering to the equipment, which causes a cost burden that is not small. Accordingly, there is a demand for using a compound having no fluorine atom as a polyol cross-linking agent.

The fluoroelastomer composition of the present disclosure contains a compound having the structure described later as a cross-linking agent. This compound is easy to handle since it has no fluorine atom.

Hereinafter, each component of the fluoroelastomer composition of the present disclosure will be described.

### (a) Fluoroelastomer

A fluoroelastomer used in the present disclosure is preferably a polyol-crosslinkable fluoroelastomer. A polyol-crosslinkable fluoroelastomer is a fluoroelastomer having a polyol-crosslinkable site. Herein, the fluoroelastomer is an amorphous fluoropolymer. Being "amorphous" means that the magnitude of a melting peak (ΔH) appearing in differential scanning calorimetry (DSC) (temperature-increasing rate 20°C/min) or differential thermal analysis (DTA) (temperature-increasing rate 20°C/min) of the fluoropolymer is 4.5 J/g or less. The fluoroelastomer exhibits elastomeric characteristics by being crosslinked. Elastomeric characteristics mean such characteristics that the polymer can be stretched, and retain its original length when the force required to stretch the polymer is no longer applied.

The polyol-crosslinkable site may be a site having vinylidene fluoride (VDF) unit. Among fluoroelastomers, a fluoroelastomer containing VdF unit is preferable because the effect of using the cross-linking agent (b) is easily demonstrated.

The fluoroelastomer having a polyol-crosslinkable site may be a VdF-based fluoroelastomer or an elastomer having a polyol-crosslinkable functional site in the side chain and/or the main chain. Examples of the VdF-based fluoroelastomer include tetrafluoroethylene (TFE)/propylene/VdF-based fluoroelastomer, ethylene/hexafluoropropylene (HFP)/VdF-based fluoroelastomer, VdF/HFP-based fluoroelastomer, and VdF/TFE/HFP-based fluoroelastomer. These fluoroelastomers having a polyol-crosslinkable site may be used singly or in any combination thereof without impairing the effects of the present disclosure.

Among these, the fluoroelastomer is preferably a fluoroelastomer composed of VdF and at least one other fluorine-containing monomer, particularly preferably at least one elastomer selected from the group consisting of VdF/HFP-based fluoroelastomer, VdF/TFE/HFP-based fluoroelastomer, and VdF/TFE/PAVE-based fluoroelastomer, and more preferably at least one elastomer selected from the group consisting of VdF/HFP-based fluoroelastomer and VdF/TFE/HFP-based fluoroelastomer.

The Mooney viscosity (ML 1+10(100°C)) at 100°C of the fluoroelastomer is preferably 2 or higher, more preferably 10 or higher, still more preferably 20 or higher, and particularly preferably 30 or higher; and is preferably 200 or lower, more preferably 150 or lower, still more preferably 120 or lower, and particularly preferably 100 or lower. The Mooney viscosity is a value measured according to ASTM D1646-15 and JIS K6300-1:2013.

The fluorine content of the fluoroelastomer is preferably 62 to 72% by mass, more preferably 64 to 71% by mass, and still more preferably 65 to 71% by mass. The fluorine content is determined by calculation from the composition ratio of monomer units constituting the fluoroelastomer.

The fluoroelastomer preferably has a glass transition temperature of -50 to 0°C. The glass transition temperature can be determined by heating 10 mg of a sample at 20°C/min using a differential scanning calorimeter to obtain a DSC curve, and obtaining, as the glass transition temperature, a temperature indicating an intersection point of an extension of a baseline around the second-order transition of the DSC curve with a tangent of the DSC curve at the inflection point.

### (b) Cross-linking agent

The fluoroelastomer composition of the present disclosure comprises a cross-linking agent. In the present disclosure, as the cross-linking agent, a compound is used that has, in the molecule, two or more hydroxy groups, two or more carbon atoms, and at least one linking group that links a carbon atom to another carbon atom, selected from the group consisting of monosulfide bond, disulfide bond, and a polysulfide bond, and that has no fluorine atom.

The cross-linking agent used in the present disclosure is different from 2,2-bis(4-hydroxyphenyl)perfluoropropane (bisphenol AF), which has conventionally been used as a cross-linking agent, in that it has no fluorine atom in the molecule.

The cross-linking agent used in the present disclosure, unlike conventional cross-linking agents, has no fluorine atom in the molecule and also has a structure in which a carbon atom is linked to another carbon atom via monosulfide bond, disulfide bond, or a polysulfide bond. Fluoroelastomer is excellent in heat resistance, and it is thus sometimes used in a high-temperature environment compared to non-fluoroelastomer. Since a bond between a carbon atom and a sulfur atom (C-S bond) is dissociated by heat more easily compared to a bond between a carbon atom and another carbon atom (C-C bond), it was expected that using a compound having a bond between a carbon atom and a sulfur atom (C-S bond) as a cross-linking agent for crosslinking fluoroelastomer would result in poor heat resistance of the resulting crosslinked product. Surprisingly, it has been found that even in the case where a cross-linking agent is used that has no fluorine atom in the molecule and also has a structure in which a carbon atom is linked to another carbon atom via monosulfide bond, disulfide bond, or a polysulfide bond, the resulting crosslinked product exhibits ordinary-state properties, compression set at high temperature, and weight reduction temperature comparable to those obtained using conventional cross-linking agents.

The number of the hydroxy groups that the cross-linking agent has is 2 or more, preferably 2 to 4, more preferably 2 to 3, and still more preferably 2.

The number of the carbon atoms that the cross-linking agent has is 2 or more, preferably 3 or more, more preferably 6 or more, still more preferably 9 or more, and even more preferably 12 or more, and is preferably 22 or less.

The cross-linking agent suitably has two or more benzene rings. The two or more benzene rings at least include, for example, a first benzene ring and a second benzene ring. The number of the benzene rings that the cross-linking agent has is 2 or more, preferably 2 to 4, more preferably 2 to 3, and still more preferably 2.

The cross-linking agent has a linking group that links two carbon atoms. In the case where the cross-linking agent has two or more benzene rings, the cross-linking agent may have at least a first benzene ring and a second benzene ring. In the case where the cross-linking agent has two or more benzene rings, a carbon atom constituting the first benzene ring and a carbon atom constituting the second benzene ring can be linked by the linking group.

The linking group is at least one selected from the group consisting of monosulfide bond (-S-), disulfide bond (-S-S-), and a polysulfide bond (-(S)ₓ₁-, where X1 is an integer of 3 or more). As the linking group, at least one selected from the group consisting of monosulfide bond and disulfide bond is preferable. X1 is preferably an integer of 3 to 10, and more preferably 3.

The cross-linking agent is preferably a compound represented by the following general formula (b1): 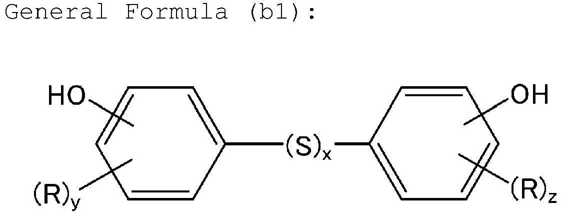 wherein x is an integer of 1 or more, R is a substituent having no fluorine atom, and y and z are independently an integer of 0 to 4.

In the general formula (b1), x represents the number of sulfur atoms linked. For example, in the case where x is 2, the cross-linking agent has, as a linking group that links a carbon atom constituting the first benzene ring to a carbon atom constituting the second benzene ring, disulfide bond (-S-S-). x is an integer of 1 or more, preferably an integer of 1 to 10, more preferably an integer of 1 to 3, and still more preferably 1 or 2.

R represents a substituent bonded to the first benzene ring or the second benzene ring. R is a substituent having no fluorine atom, and therefore, the compound represented by the general formula (b1) has no fluorine atom.

The compound represented by the general formula (b1) may or may not have a substituent represented by R. R is not limited as long as it is a monovalent group other than a fluorine atom or a group having a fluorine atom, and examples thereof include, independently at each occurrence, a chlorine atom, a hydroxy group, an amino group, a cyano group, a thiol group, an alkyl group having 1 to 5 carbon atoms, and an alkoxy group having 1 to 5 carbon atoms, with an alkyl group having 1 to 5 carbon atoms being preferable independently at each occurrence.

y and z each represent the number of substituents (R) bonded to the first benzene ring or the second benzene ring. y and z are each independently 0 to 4, and preferably 0 or 1.

As the cross-linking agent (b), at least one selected from the group consisting of 4,4'-thiodiphenol, 4,4'-dithiobisphenol, and 4,4'-thiodi(o-cresol) is preferable.

The content of the cross-linking agent is preferably 0.1 to 50 parts by mass, more preferably 0.3 parts by mass or more, and still more preferably 0.5 parts by mass or more, and is more preferably 5.0 parts by mass or less, still more preferably 3.0 parts by mass or less, and even more preferably 2.0 parts by mass or less based on 100 parts by mass of the fluoroelastomer, because the crosslinking reaction in the crosslinking process proceeds at an appropriate rate and formed articles having sufficient tensile strength, elongation at break, and compression set characteristics at high temperature, as well as moderate hardness, can be obtained.

### (c) Crosslinking accelerator

The fluoroelastomer composition of the present disclosure preferably further contains a crosslinking accelerator. Use of the crosslinking accelerator enables the crosslinking reaction to be promoted by promoting the formation of intramolecular double bonds in dehydrofluorination reaction of the main chain of the fluoroelastomer.

Onium compounds are generally used as a polyol-crosslinkable crosslinking accelerator. The onium compound is not limited, and examples thereof include ammonium salts such as quaternary ammonium salts, phosphonium salts such as quaternary phosphonium salts, and sulfonium salts; among these, quaternary ammonium salts and quaternary phosphonium salts are preferable.

Examples of the quaternary ammonium salts are not limited, but include 8-methyl-1,8-diazabicyclo[5.4.0]-7-undecenium chloride, 8-methyl-1,8-diazabicyclo[5.4.0]-7-undecenium iodide, 8-methyl-1,8-diazabicyclo[5.4.0]-7-undecenium hydroxide, 8-methyl-1,8-diazabicyclo[5.4.0]-7-undecenium methylsulfate, 8-ethyl-1,8-diazabicyclo[5.4.0]-7-undecenium bromide, 8-propyl-1,8-diazabicyclo[5.4.0]-7-undecenium bromide, 8-dodecyl-1,8-diazabicyclo[5.4.0]-7-undecenium chloride, 8-dodecyl-1,8-diazabicyclo[5.4.0]-7-undecenium hydroxide, 8-eicosyl-1,8-diazabicyclo[5.4.0]-7-undecenium chloride, 8-tetracosyl-1,8-diazabicyclo[5.4.0]-7-undecenium chloride, 8-benzyl-1,8-diazabicyclo[5.4.0]-7-undecenium chloride (hereinafter, referred to as DBU-B), 8-benzyl-1,8-diazabicyclo[5.4.0]-7-undecenium hydroxide, 8-phenethyl-1,8-diazabicyclo[5.4.0]-7-undecenium chloride, 8-(3-phenylpropyl)-1,8-diazabicyclo[5.4.0]-7-undecenium chloride, benzyldimethyloctadecylammonium chloride, tetrabutylammonium bromide, tetrabutylammonium chloride, benzyltributylammonium chloride, benzyltriethylammonium chloride, tetrabutylammonium hydrogen sulfate salt, and tetrabutylammonium hydroxide. Among these, from the viewpoint of crosslinkability, and the physical properties of crosslinked products, DBU-B or benzyldimethyloctadecylammonium chloride is preferable.

Examples of the quaternary phosphonium salts are not limited, but can include tetrabutylphosphonium chloride, benzyltriphenylphosphonium chloride (hereinafter, referred to as BTPPC), benzyltrimethylphosphonium chloride, benzyltributylphosphonium chloride, tributylallylphosphonium chloride, tributyl-2-methoxypropylphosphonium chloride, and benzylphenyl(dimethylamino)phosphonium chloride; among these, from the viewpoint of crosslinkability, and the physical properties of crosslinked products, benzyltriphenylphosphonium chloride (BTPPC) is preferable.

The content of the crosslinking accelerator is preferably 0.1 to 10 parts by mass, more preferably 0.2 parts by mass or more, and still more preferably 0.3 parts by mass or more, and is more preferably 3.0 parts by mass or less, still more preferably 1.5 parts by mass or less, and even more preferably 1.0 parts by mass or less based on 100 parts by mass of the fluoroelastomer, because the crosslinking reaction proceeds at an appropriate rate and formed articles with more excellent compression set characteristics at high temperature can be obtained.

### (d) Acid acceptor

The fluoroelastomer composition of the present disclosure may further comprise an acid acceptor. By comprising an acid acceptor, the crosslinking reaction of the fluoroelastomer composition proceeds more smoothly, and the compression set characteristics at high temperature are further improved.

Examples of the acid acceptor include: metal oxides such as magnesium oxide, calcium oxide, bismuth oxide, and zinc oxide; metal hydroxides such as calcium hydroxide; hydrotalcite; alkali metal silicates, such as sodium metasilicate, disclosed in Japanese Translation of PCT International Application Publication No. 2011-522921; and metal salts of weak acids disclosed in Japanese Patent Laid-Open No. 2003-277563. Examples of the metal salts of weak acids include carbonates, benzoates, oxalates, and phosphites of Ca, Sr, Ba, Na, and K.

The acid acceptor is preferably at least one selected from the group consisting of metal oxides, metal hydroxides, alkali metal silicates, metal salts of weak acids, and hydrotalcites and more preferably sodium metasilicate hydrate, calcium hydroxide, magnesium oxide, bismuth oxide, or hydrotalcites, because a formed article with more excellent compression set characteristics at high temperature can be obtained. When a formed article to be obtained is required to have good water resistance, acid resistance, or resistance to organic acid ester including biodiesel, the acid acceptor is preferably at least one selected from the group consisting of bismuth oxides and hydrotalcites.

In the fluoroelastomer composition, the content of the acid acceptor is preferably 0.1 to 100 parts by mass, more preferably 1 to 50 parts by mass, still more preferably 1 to 30 parts by mass, and particularly preferably 1 to 20 parts by mass based on 100 parts by mass of the fluoroelastomer, because a formed article with more excellent compression set characteristics at high temperature can be obtained.

When the content of the acid acceptor is increased, the water resistance, the acid resistance, and the resistance to organic acid ester including biodiesel of a resulting formed article tend to reduce, and on the other hand, when the content of the acid acceptor is reduced, the crosslinking rate reduces, and the mechanical properties tend to reduce due to a reduction in crosslink density. Therefore, the content of the acid acceptor can be selected according to the application of a formed article to be obtained. In the case where an acid acceptor other than calcium hydroxide is contained, the content of calcium hydroxide is reduced to, for example, 0 to 1.5 parts by mass, and then the content of the other acid acceptor is adjusted to adjust the crosslink density, whereby a formed article with more excellent compression set characteristics at high temperature can be obtained.

### (e) Other components

The fluoroelastomer composition may contain a variety of additives such as additives usually contained in a fluoroelastomer composition as required, and examples of such additives include fillers (carbon black, bituminous coal, barium sulfate, diatomaceous earth, calcined clay, talc, wollastonite, carbon nanotubes, silica, titanium oxide, alumina, and the like), processing aids (wax and the like), plasticizers, colorants, stabilizers, tackifiers (cumarone resins, cumarone indene resins, and the like), mold release agents, electroconductivity imparting agents, thermal conductivity imparting agents, surface non-adhesive agents, flexibility imparting agents, heat resistance improvers, flame retarders, foaming agents, and antioxidants disclosed in International Publication No. WO 2012/023485. The fluoroelastomer composition may contain one or more of commonly-used cross-linking agents and crosslinking accelerators different from those described above.

Among these, carbon black is preferably thermal carbon black or furnace carbon black, and more preferably MT carbon black, FT carbon black, or SRF carbon black. When carbon black having a relatively large particle diameter such as MT carbon black or FT carbon black is added, a formed article with excellent compression set characteristics is obtained, and when carbon black having a small particle diameter is added, a formed article with excellent strength and elongation is obtained. By adding carbon blacks different in grade in combination, the above-described characteristics can be balanced.

Barium sulfate and wollastonite are preferable as a filler other than carbon black.

Examples of the processing aid include, but are not limited to, aliphatic amines such as stearylamine and the like, fatty acid esters such as stearic acid ester and sebacic acid ester, fatty acid amides such as stearic acid amide, long-chain alkyl alcohols, natural waxes, polyethylene waxes, phosphoric acid esters such as tricresyl phosphate and the like, and silicone-based processing aids. When two or more processing aids are added in appropriate amounts as required, mold releasability during molding and the physical properties of the formed article may well be balanced.

The content of the filler such as carbon black is not limited, and is preferably 0 to 300 parts by mass, more preferably 1 to 150 parts by mass, even more preferably 2 to 100 parts by mass, and particularly preferably 2 to 75 parts by mass based on 100 parts by mass of the fluoroelastomer.

The content of the processing aid such as wax is preferably 0 to 10 parts by mass, still more preferably 0 to 5 parts by mass, and particularly preferably 0 to 2 parts by mass based on 100 parts by mass of the fluoroelastomer. When a processing aid, a plasticizer, and a mold release agent are used, the mechanical properties and the sealability of a resulting formed article tend to be impaired, and thus the contents thereof need to be regulated so that the characteristics of a desired formed article to be obtained are acceptable.

The fluoroelastomer composition may contain a dialkyl sulfone compound. By containing the dialkyl sulfone compound, the crosslinking efficiency of the fluoroelastomer composition is enhanced, the crosslinking rate is increased, the compression set characteristics are further improved, and the flowability of a rubber compound is improved. Examples of the dialkyl sulfone compound include dimethyl sulfone, diethyl sulfone, dibutyl sulfone, methyl ethyl sulfone, diphenyl sulfone, and sulfolane. Among them, sulfolane is preferred from the viewpoint of crosslinking efficiency and compression set characteristics and appropriate boiling point. The content of the dialkyl sulfone compound is preferably 0 to 10 parts by mass, more preferably 0 to 5 parts by mass, and particularly preferably 0 to 3 parts by mass based on 100 parts by mass of the fluoroelastomer. In a case where the fluoroelastomer composition of the present disclosure contains a dialkyl sulfone compound, the lower limit of the content of the dialkyl sulfone compound may be, for example, 0.1 parts by mass or more based on 100 parts by mass of the fluoroelastomer.

The dialkyl sulfone compound and the processing aid may be added together, because the crosslinking rate, the flowability of a rubber compound during forming, mold releaseability during molding, and the mechanical properties of the formed article are well balanced.

The fluoroelastomer composition is obtained by kneading the fluoroelastomer (a), the cross-linking agent (b), the crosslinking accelerator (c), the acid acceptor (d), and the other components (e) and the like by using a rubber kneading machine generally used. The rubber kneading machine may be a roll, a kneader, a Banbury mixer, an internal mixer, a twinscrew extruder, or the like.

In order to homogeneously disperse the components in the elastomer, a method may be used in which the fluoroelastomer (a), the cross-linking agent (b), and the crosslinking accelerator (c) are melted and kneaded at a high temperature of 100 to 200°C using a closed-type kneading machine such as a kneader, and then the acid acceptor (d) and the other components (e) are kneaded at a relatively low temperature equal to or lower than such a temperature.

The dispersibility can further be enhanced by kneading the fluoroelastomer (a), the cross-linking agent (b), the crosslinking accelerator (c), the acid acceptor (d), and the other components (e), then allowing the resultant to stand at room temperature for 12 hours or more, and then again kneading the resultant.

### <Formed article>

A formed article of the present disclosure can be obtained by crosslinking the fluoroelastomer composition. The formed article of the present disclosure can also be obtained by forming and crosslinking the fluoroelastomer composition. The fluoroelastomer composition can be formed by a conventionally known method. The forming and crosslinking methods and conditions may be within the scope of known methods and conditions of the adopted forming and crosslinking. The order of forming and crosslinking is not limited, and the composition may be formed and then crosslinked, may be crosslinked and then formed, or simultaneously formed and crosslinked.

Examples of the forming method include, but are not limited to, compression molding, transfer molding, injection molding, extrusion forming, and forming involving a rotocure. The crosslinking method may be a steam crosslinking method, a heating crosslinking method, a radiation crosslinking method, or the like; among these, a steam crosslinking method or a heating crosslinking method is preferable. The unlimited specific crosslinking condition may appropriately be determined according to the kinds of the cross-linking agent (b), the crosslinking accelerator (c), the acid acceptor (d), and the like to be used usually in the temperature range of 140 to 250°C and in the crosslinking time of 1 minute to 24 hours.

By heating the obtained formed article with an oven or the like, mechanical properties such as tensile strength, heat resistance, and compression set characteristics at high temperature can be improved. The unlimited specific crosslinking condition may appropriately be determined according to the kinds of the cross-linking agent (b), the crosslinking accelerator (c), the acid acceptor (d), and the like to be used usually in the temperature range of 140 to 300°C and in the range of 30 minutes to 72 hours. The fluoroelastomer composition can be suitably utilized as a molding material for obtaining formed articles. The formed articles may be, for example, sealing materials, tubes, hoses, and the like.

Although the embodiments have been described above, it will be understood that various changes in form and details can be made without departing from the gist and scope of the claims.
<1> According to a first aspect of the present disclosure, there is provided a fluoroelastomer composition comprising a fluoroelastomer (a) and a cross-linking agent (b),
   wherein the cross-linking agent (b) has, in a molecule,
      two or more hydroxy groups,
      two or more carbon atoms, and
      at least one linking group that links a carbon atom to another carbon atom, selected from the group consisting of monosulfide bond, disulfide bond, and a polysulfide bond, and
   wherein the cross-linking agent (b) has no fluorine atom.
<2> According to a second aspect of the present disclosure, there is provided the fluoroelastomer composition according to the first aspect,
   wherein the cross-linking agent (b) has, in a molecule,
      two or more hydroxy groups,
      two or more benzene rings, and
      at least one linking group that links a carbon atom constituting a first benzene ring to a carbon atom constituting a second benzene ring, selected from the group consisting of monosulfide bond, disulfide bond, and a polysulfide bond, and
   wherein the cross-linking agent (b) has no fluorine atom.
<3> According to a third aspect of the present disclosure, there is provided the fluoroelastomer composition according to the first or second aspect, wherein the cross-linking agent (b) is a compound represented by the following general formula (b1): 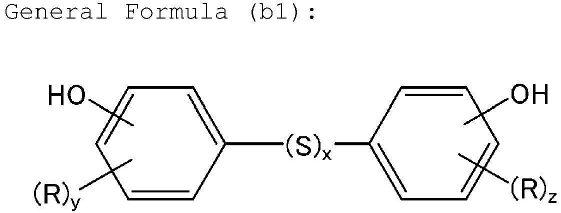 wherein x is an integer of 1 or more, R is a substituent having no fluorine atom, and y and z are independently an integer of 0 to 4.
<4> According to a fourth aspect of the present disclosure, there is provided the fluoroelastomer composition according to the third aspect, wherein x is 1 or 2.
<5> According to a fifth aspect of the present disclosure, there is provided the fluoroelastomer composition according to any of the first to fourth aspects, wherein the fluoroelastomer (a) contains vinylidene fluoride unit.
<6> According to a sixth aspect of the present disclosure, there is provided the fluoroelastomer composition according to any of the first to fifth aspects, wherein a content of the cross-linking agent (b) is 0.1 to 50 parts by mass based on 100 parts by mass of the fluoroelastomer (a).
<7> According to a seventh aspect of the present disclosure, there is provided the fluoroelastomer composition according to any of the first to sixth aspects, further comprising a crosslinking accelerator (c).
<8> According to an eighth aspect of the present disclosure, there is provided the fluoroelastomer composition according to any of the first to seventh aspects, further comprising an acid acceptor (d).
<9> According to a ninth aspect of the present disclosure, there is provided a formed article obtained from the fluoroelastomer composition according to any of the first to eighth aspects.

### EXAMPLES

Next, embodiments of the present disclosure will now be described with reference to Examples, but the present disclosure is not limited only to Examples.

Various numerical values in Examples were measured by the following methods.

### <Composition of monomers of fluoroelastomer>

Measurements were performed using ¹⁹F-NMR (manufactured by Bruker, AC300P).

### <Fluorine content>

The fluorine content was determined by calculation from the composition of the fluoroelastomer measured by ¹⁹F-NMR.

### <Mooney viscosity>

The Mooney viscosity was measured according to ASTM D1646-15 and JIS K6300-1:2013. The measurement temperature was 100°C.

### <Glass transition temperature (Tg)>

Using a differential scanning calorimeter (manufactured by Mettler Toledo, DSC822e, or manufactured by Hitachi High-Tech Corporation, X-DSC7000), 10 mg of a sample was heated at 20°C/min to obtain a DSC curve, and a temperature indicating an intersection point of an extension of a baseline around the second-order transition of the DSC curve with a tangent of the DSC curve at the inflection point was taken as the glass transition temperature.

### <Heat of fusion>

Using a differential scanning calorimeter (manufactured by Mettler Toledo, DSC822e, or manufactured by Hitachi High-Tech Corporation, X-DSC7000), 10 mg of a sample was heated at 20°C/min to obtain a DSC curve, and from the magnitude of a melting peak (ΔH) appearing in the DSC curve, a heat of fusion was calculated.

### <Crosslinking characteristics>

For a fluoroelastomer composition, in primary crosslinking, a crosslinking curve at a temperature shown in each table was determined by using a vulcanization tester (manufactured by M&K Co., Ltd. MDR H2030), and the minimum torque (ML), maximum torque (MH), induction time (T10), intermediate crosslinking time (T50), and optimum crosslinking time (T90) were determined from the change in the torque.

### <100% Modulus, tensile strength, and elongation at break>

A test piece having a dumbbell No. 6 shape was prepared using a crosslinked sheet of 2 mm in thickness. The 100% modulus (M100), the tensile strength, and the elongation at break at 23°C were measured by using the obtained test piece and a tensile tester (manufactured by A&D Co., Ltd., Tensilon RTG-1310) according to JIS K6251:2010 under the condition of 500 mm/min.

### <Hardness>

Three crosslinked sheets of 2 mm in thickness were stacked, and the durometer hardness thereof (type A, peak value) was measured according to JIS K6251-3:2012.

### <Compression set>

The compression set was measured using a small test piece for measurement of compression set (O-ring with P-24 size) according to method A of JIS K6262:2013 with a compressibility of 25%, a test temperature of 200°C or 150°C, and a test time of 72 hours.

### <Weight reduction temperature>

A sample of about 10 mg was prepared by cutting a crosslinked sheet of 2 mm in thickness, and using a TG/DTA (simultaneous thermogravimetric analyzer), the sample was heated in the air atmosphere at a rate of 10°C/min from 25°C to 600°C, and the temperatures at which the weight of the sample decreased by 1.0% by weight or 5.0% by weight were measured.

The following materials were used in Examples and Comparative Examples.
Fluoroelastomer A: vinylidene fluoride/hexafluoropropylene copolymer
Molar ratio of vinylidene fluoride/hexafluoropropylene: 78/22
Fluorine content: 66% by mass
Mooney viscosity (ML 1+10 (100°C)): 69
Glass transition temperature: -18°C
Heat of fusion: not observed in second run
Fluoroelastomer B: vinylidene fluoride/hexafluoropropylene/tetrafluoroethylene copolymer Molar ratio of vinylidene fluoride/hexafluoropropylene/tetrafluoroethylene: 58/22/20
Fluorine content: 69% by mass
Mooney viscosity (ML 1+10 (100°C)): 42
Glass transition temperature: -13°C
Heat of fusion: not observed in second run
Cross-linking agent A: 4,4'-thiodiphenol
Cross-linking agent B: 4,4'-dithiodiphenol
Cross-linking agent C: 4,4'-thiodi(o-cresol)
Cross-linking agent D: 2,2-bis(4-hydroxylphenyl)perfluoropropane (bisphenol AF)
Crosslinking accelerator: 8-benzyl-1,8-diazabicyclo[5,4,0]-7-undecenium chloride (DBU-B)
Carbon black: MT carbon (N₂SA: 8 m²/g, DBP: 43 ml/100 g)
Magnesium oxide: MA150 (manufactured by Kyowa Chemical Industry Co., Ltd.)
Calcium hydroxide: NICC5000 (manufactured by Inoue Calcium Corporation)

### Examples 1 to 10 and Comparative Examples 1 to 2

Respective components were compounded according to the formulation shown in Tables 1 to 2, and kneaded on an open roll to thereby prepare fluoroelastomer compositions. The crosslinking characteristics of the obtained fluoroelastomer compositions are shown in Tables 1 to 2. Next, the fluoroelastomer compositions were crosslinked by primary crosslinking (press crosslinking) at 170°C for 10 minutes and secondary crosslinking (oven crosslinking) at 230°C for 24 hours to obtain crosslinked sheets (2 mm in thickness), small test pieces for measurement of compression set, and test pieces for measurement of weight reduction temperature. The evaluation results are shown in Tables 1 to 2.

### [Table 1]

**Table 1**

| | | | Example 1 | Example 2 | Example 3 | Example 4 | Example 5 | Comparative Example 1 |
|---|---|---|---|---|---|---|---|---|
| | Formulation | | | | | | | |
| | Fluoroelastomer A | phr | 100 | 100 | 100 | 100 | 100 | 100 |
| | Cross-linking agent A | phr | 1.64 | 1.49 | 1.36 | | | |
| | Cross-linking agent B | phr | | | | 1.88 | | |
| | Cross-linking agent C | phr | | | | | 1.90 | |
| | Cross-linking agent D | phr | | | | | | 2.00 |
| | Crosslinking accelerator | phr | 0.60 | 0.55 | 0.50 | 0.60 | 0.60 | 0.40 |
| | Carbon black | phr | 20 | 20 | 20 | 20 | 20 | 20 |
| | Magnesium oxide | phr | 3 | 3 | 3 | 3 | 3 | 3 |
| | Calcium hydroxide | phr | 6 | 6 | 6 | 6 | 6 | 6 |

| | Crosslinking characteristics | | | | | | | |
|---|---|---|---|---|---|---|---|---|
| | Minimum torque (ML) | dNm | 2.1 | 2.0 | 1.9 | 1.9 | 1.7 | 1.7 |
| | Maximum torque (MH) | dNm | 22.5 | 19.5 | 17.4 | 18.6 | 21.9 | 21.1 |
| | Induction time (T10) | min | 5.0 | 4.4 | 4.1 | 2.6 | 4.5 | 2.9 |
| | Intermediate crosslinking time (T50) | min | 7.0 | 6.3 | 5.9 | 4.1 | 6.2 | 3.7 |
| | Optimum crosslinking time (T90) | min | 10.1 | 9.2 | 8.9 | 7.5 | 9.5 | 5.7 |

| | Crosslinking conditions | | | | | | | |
|---|---|---|---|---|---|---|---|---|
| | Primary crosslinking | | 170°C × 10 minutes | | | | | |
| | Secondary crosslinking | | 230°C × 24 hours | | | | | |

| | Physical properties | | | | | | | |
|---|---|---|---|---|---|---|---|---|
| | M100 | MPa | 6.0 | 4.8 | 4.3 | 5.2 | 5.2 | 5.5 |
| | Tensile strength | MPa | 16.9 | 15.6 | 15.1 | 10.7 | 11.6 | 16.9 |
| | Elongation | % | 230 | 240 | 260 | 180 | 180 | 210 |
| | Hardness (Shore A, Peak) | - | 74 | 73 | 72 | 73 | 73 | 72 |
| | CS 200°C×72h | % | 23 | 27 | 28 | 52 | 41 | 20 |
| | 1% weight reduction temperature | °C | 331 | 333 | 334 | 326 | 326 | 336 |
| | 5% weight reduction temperature | °C | 380 | 382 | 384 | 383 | 376 | 390 |

### [Table 2]

**Table 2**

| | | | Example 6 | Example 7 | Example 8 | Example 9 | Example 10 | Comparative Example 2 |
|---|---|---|---|---|---|---|---|---|
| | Formulation | | | | | | | |
| | Fluoroelastomer B | phr | 100 | 100 | 100 | 100 | 100 | 100 |
| | Cross-linking agent A | phr | 3.20 | 2.28 | 1.85 | | | |
| | Cross-linking agent B | phr | | | | 2.82 | | |
| | Cross-linking agent C | phr | | | | | 2.78 | |
| | Cross-linking agent D | phr | | | | | | 2.00 |
| | Crosslinking accelerator | phr | 1.20 | 0.83 | 0.62 | 1.00 | 100 | 0.60 |
| | Carbon black | phr | 20 | 20 | 20 | 20 | 20 | 20 |
| | Magnesium oxide | phr | 3 | 3 | 3 | 3 | 3 | 3 |
| | Calcium hydroxide | phr | 6 | 6 | 6 | 6 | 6 | 6 |

| | Crosslinking characteristics | | | | | | | |
|---|---|---|---|---|---|---|---|---|
| | Minimum torque (ML) | dNm | 3.8 | 3.3 | 3.1 | 1.9 | 1.4 | 2.7 |
| | Maximum torque (MH) | dNm | 17.2 | 12.9 | 9.9 | 14.8 | 13.2 | 11.2 |
| | Induction time (T10) | min | 9.1 | 6.2 | 5.2 | 2.6 | 3.8 | 3.4 |
| | Intermediate crosslinking time (T50) | min | 22.5 | 14.9 | 13.3 | 4.1 | 6.1 | 4.8 |
| | Optimum crosslinking time (T90) | min | 38.2 | 29.0 | 26.4 | 7.5 | 9.7 | 8.0 |

| | Crosslinking conditions | | | | | | | |
|---|---|---|---|---|---|---|---|---|
| | Primary crosslinking | | 170°C × 10 minutes | | | | | |
| | Secondary crosslinking | | 230°C × 24 hours | | | | | |

| | Physical properties | | | | | | | |
|---|---|---|---|---|---|---|---|---|
| | M100 | MPa | 6.1 | 4.8 | 4.1 | 5.1 | 3.9 | 3.8 |
| | Tensile strength | MPa | 17.6 | 15.4 | 12.6 | 14.6 | 13.2 | 15.6 |
| | Elongation | % | 250 | 310 | 380 | 340 | 360 | 355 |
| | Hardness (Shore A, Peak) | - | 81 | 78 | 73 | 74 | 73 | 75.6 |
| | CS 150°C×72h | % | 30 | 39 | 45 | 36 | 38 | 42 |
| | 1% weight reduction temperature | °C | 333 | 335 | 334 | 330 | 329 | 339 |
| | 5% weight reduction temperature | °C | 387 | 389 | 391 | 385 | 380 | 394 |

## Claims

1. A fluoroelastomer composition comprising a fluoroelastomer (a) and a cross-linking agent (b),
wherein the cross-linking agent (b) has, in a molecule,
two or more hydroxy groups,
two or more carbon atoms, and
at least one linking group that links a carbon atom to another carbon atom, selected from the group consisting of monosulfide bond, disulfide bond, and a polysulfide bond, and
wherein the cross-linking agent (b) has no fluorine atom.

2. The fluoroelastomer composition according to claim 1,
wherein the cross-linking agent (b) has, in a molecule,
two or more hydroxy groups,
two or more benzene rings, and
at least one linking group that links a carbon atom constituting a first benzene ring to a carbon atom constituting a second benzene ring, selected from the group consisting of monosulfide bond, disulfide bond, and a polysulfide bond, and
wherein the cross-linking agent (b) has no fluorine atom.

3. The fluoroelastomer composition according to claim 1 or 2, wherein the cross-linking agent (b) is a compound represented by the following general formula (b1): 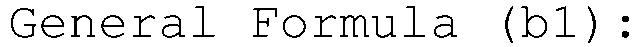 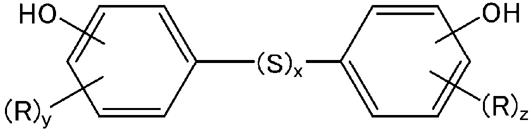 wherein x is an integer of 1 or more, R is a substituent having no fluorine atom, and y and z are independently an integer of 0 to 4.

4. The fluoroelastomer composition according to claim 3, wherein x is 1 or 2.

5. The fluoroelastomer composition according to any one of claims 1 to 4, wherein the fluoroelastomer (a) contains vinylidene fluoride unit.

6. The fluoroelastomer composition according to any one of claims 1 to 5, wherein a content of the cross-linking agent (b) is 0.1 to 50 parts by mass based on 100 parts by mass of the fluoroelastomer (a).

7. The fluoroelastomer composition according to any one of claims 1 to 6, further comprising a crosslinking accelerator (c).

8. The fluoroelastomer composition according to any one of claims 1 to 7, further comprising an acid acceptor (d).

9. A formed article obtained from the fluoroelastomer composition according to any one of claims 1 to 8.
